(19) Europäisches Patentamt
European Patent Office
Office européen des brevets

(11) **EP 1 532 020 B1**

(12) **EUROPÄISCHE PATENTSCHRIFT**

(45) Veröffentlichungstag und Bekanntmachung des Hinweises auf die Patenterteilung:
**20.04.2011 Patentblatt 2011/16**

(21) Anmeldenummer: **03718604.6**

(22) Anmeldetag: **24.02.2003**

(51) Int Cl.:
***B60R 21/01*** *(2006.01)*

(86) Internationale Anmeldenummer:
**PCT/DE2003/000561**

(87) Internationale Veröffentlichungsnummer:
**WO 2004/020252 (11.03.2004 Gazette 2004/11)**

(54) **VORRICHTUNG ZUR AUFPRALLSENSIERUNG**

DEVICE FOR SENSING AN IMPACT

SYSTEME DE DETECTION DE COLLISION

(84) Benannte Vertragsstaaten:
**DE ES FR GB IT SE**

(30) Priorität: **14.08.2002 DE 10237162**

(43) Veröffentlichungstag der Anmeldung:
**25.05.2005 Patentblatt 2005/21**

(73) Patentinhaber: **ROBERT BOSCH GMBH**
**70442 Stuttgart (DE)**

(72) Erfinder:
• **OTTERBACH, Jens**
**57482 Wenden (DE)**
• **KOCHER, Pascal**
**70839 Gerlingen (DE)**

• **NITSCHE, Gerald**
**72501 Gammertingen (DE)**
• **SCHOMACKER, Jochen**
**72762 Reutlingen (DE)**
• **ULMER, Michael**
**72116 Moessingen (DE)**
• **RECKNAGEL, Rolf-Juergen**
**07747 Jena (DE)**
• **ADAM, Boris**
**71126 Gäufelden (DE)**

(56) Entgegenhaltungen:
**EP-A- 1 114 757     DE-A- 19 830 835**
**DE-C- 19 647 408**

## Beschreibung

### Stand der Technik

Die Erfindung geht aus von einer Vorrichtung zur Aufprallsensierung nach der Gattung des unabhängigen Patentanspruchs.

Aus der Patentanmeldung DE 102 101 31 A ist es bekannt, Druckdaten von einem Drucksensor zu einer Steuereinheit als Differenzwerte oder Absolutwerte zu übertragen.

Aus DE 198 30 835 A1 ist es bekannt, bei einer Luftdrucksensierung zur Erkennung eines Seitenaufpralls einen Überdruck oder Unterdruck an den Umgebungsluftdruck zu normieren.

### Vorteile der Erfindung

Die erfindungsgemäße Vorrichtung zur Aufprallsensierung mit den Merkmalen des unabhängigen Patentanspruchs hat demgegenüber Vorteile. Es ist bekannt, dass nunmehr normierte Druckwerte übertragen werden. Dies stellt sicher, dass das Drucksignal unabhängig vom Umgebungsdruck ist und ermöglicht in der zentralen Steuereinheit eine einfache und kostengünstige Ausführung der Signalauswertung. Weiterhin ist mit einer besseren Performance im Steuergerät durch Auslagerung der Signalverarbeitung zu rechnen. Schließlich liefert die Normierung der Druckdaten die Voraussetzung dafür, dass die normierten Druckdaten kompatibel zu den Signalen von Beschleunigungssensoren sein können.

Durch die in den abhängigen Ansprüchen aufgeführten Maßnahmen und Weiterbildungen sind vorteilhafte Verbesserungen der im unabhängigen Patentanspruch angegebenen Vorrichtung zur Aufprallsensierung möglich. Das Signal ist auf den Umgebungsdruck normiert. Dieser Umgebungsdruck kann durch einen weiteren Sensor erfasst werden, oder er kann bereits in einem Speicher abgelegt sein, oder das Sensorelement, also insbesondere ein mikromechanisches Sensorelement, ist derart gestaltet, dass es bereits einen normierten Umgebungsdruck als Messwert abgibt. Ist ein zusätzlicher Sensor zum Drucksensor zur Aufprallsensierung vorgesehen, dann sollte vorteilhafter Weise dieser zusätzliche Sensor zur Erfassung des Umgebungsdruckes außerhalb des weitgehend geschlossenen Elements sein, in dem sich der Drucksensor zur Aufprallsensierung befindet. Der Drucksensor zur Aufprallsensierung arbeitet nämlich nach dem Prinzip der Erfassung eines adiabatischen Druckanstiegs, der auf Grund einer Verformung eines Fahrzeugteils auftritt.

### Zeichnung

Ein Ausführungsbeispiel der Erfindung ist in der Zeichnung dargestellt und in der nachfolgenden Beschreibung näher erläutert.

Es zeigen

Figur 1    ein Blockschaltbild der erfindungsgemäßen Vorrichtung und

Figur 2    ein Flussdiagramm des Ablaufs auf dem Prozessor der erfindungsgemäßen Vorrichtung.

### Beschreibung

Drucksensoren sind aus der Industrie und Automobilanwendungen bekannt. Je nach Ausführung übertragen diese Absolutdruck- oder Differenzdruckwerte. Beim Automobil werden die Drucksensoren neben der Motorsteuerung mehr und mehr auch für die Sensierung von Seitenaufprallen eingesetzt.

Es ist nun vorgesehen, dass das Drucksignal normiert wird, um so die weitere Verarbeitung zu vereinfachen. Damit ergeben sich die Vorteile, dass das Drucksignal für den Airbagauslösealgorithmus unabhängig vom Umgebungsdruck ist und die Signalverarbeitung im zentralen Steuergerät einfach und kostengünstig gehalten werden kann. Wird diese Vorverarbeitung durch die Normierung in die ausgelagerten Drucksensoren verlagert, ist eine bessere Leistungsfähigkeit im zentralen Steuergerät zu erwarten. Durch die Normierung ist insbesondere auch eine Kompatibilität der Signale der Druck- und Beschleunigungssensoren möglich.

Drucksensoren finden in modernen Rückhaltesystemen vermehrt Einsatz, um die Deformation der Seitentüren im Falle eines seitlichen Aufpralls zu messen. Dies geschieht über einen adiabatischen Druckanstieg, der eine besonders schnelle Sensierung eines Seitenaufpralls ermöglicht. Auslösezeiten von wenigen Millisekunden sind hier möglich. Das Nutzsignal im Falle eines Aufpralls ist für den Drucksensor in erster Näherung proportional zum Umgebungsdruck, also abhängig von der Höhe, in der das Fahrzeug betrieben wird, sowie der aktuellen Wetterlage. Um diese Einflussgrößen nicht im Auslösealgorithmus zu berücksichtigen, werden die Drucksignale entsprechend nachbearbeitet. Dies kann entweder im Sensor selbst oder im Steuergerät erfolgen. In gewissen Fällen kann sogar durch ein geeignetes Design des Sensorelements die Signalverarbeitung abgebildet werden, was unter Umständen eine äußerst kostengünstige Lösung sein kann. Ziel ist die Übermittlung eines Wertes wie:

$$P_{N1} = S \cdot \frac{(P - P_0)}{P_0}$$

oder

$$P_{N2} = S \cdot \frac{P}{P_0}$$

wobei S der Skalierungsfaktor ist, P der aktuell gemessene Absolutdruck im Türinnenraum und $P_0$ der absolute Umgebungsdruck. Der Vorteil für den Algorithmus bzw. das Steuergerät ist neben der Unabhängigkeit des Crashsignals vom Umgebungsdruck vor allem, dass mit der dargestellten Maßnahme die Kompatibilität von dem Druck mit bisher ausschließlich genutzten Beschleunigungssensoren ermöglicht wird.

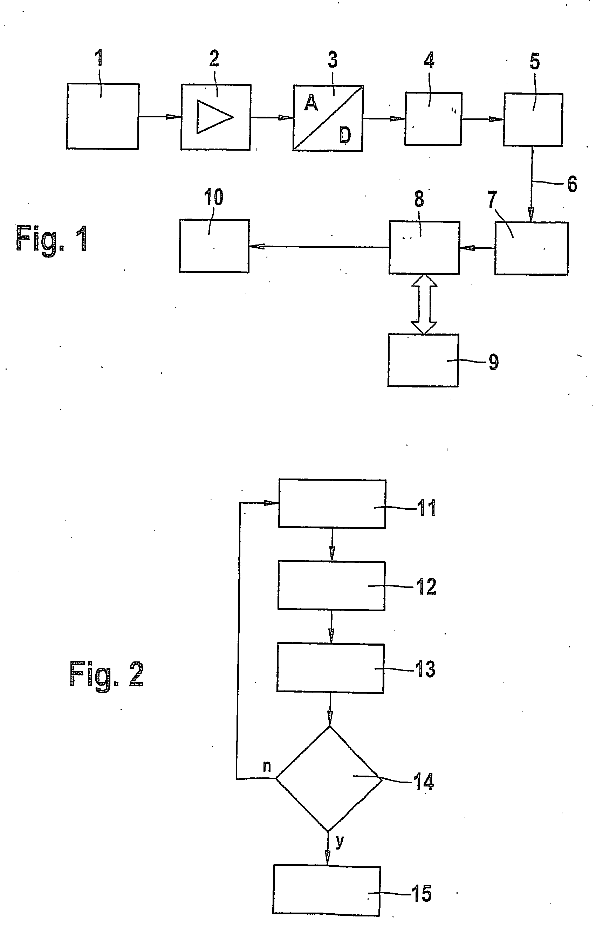

Figur 1 zeigt als Blockschaltbild die erfindungsgemäße Vorrichtung. Ein Sensierungselement oder Sensorelement 1, beispielsweise eine mikromechanische Membran, wirkt hier als druckmessendes Element. Das Signal, das von dem Sensorelement 1 abgegeben wird, wird von einem Verstärker 2 verstärkt, um dann in einen Analog-Digital-Wandler 3 zur Digitalisierung gegeben zu werden. Das digitalisierte Signal geht dann an eine Signalvorverarbeitung 4, die das vorverarbeitete Signal dann einem Senderbaustein 5 übergibt. Der Senderbaustein 5 überträgt über eine Leitung 6 zu einem Steuergerät, und zwar zu einem Empfangsbaustein 7, das gefilterte Signal. Der Empfangsbaustein 7 übergibt dann das empfangene Signal an einen Prozessor 8, der mittels eines Speichers 9 über einen Datenein-/ausgang das Drucksignal für einen Auslösealgorithmus für Rückhaltemittel verwendet. In Abhängigkeit von der Auswertung dieses Auslösealgorithmussees wird dann ein Rückhaltemittel 10, beispielsweise ein Airbag oder Gurtstraffer, angesteuert. Der Drucksensor besteht also aus dem Sensorelement 1, dem Verstärker 2, dem Analog-Digital-Wandler 3, der Signalvorverarbeitung 4 und dem Senderbaustein 5. Diese Elemente sind in einem Gehäuse untergebracht und im Seitenteil eines Fahrzeugs angeordnet, um bei einem Seitenaufprall einen adiabatischen Druckanstieg zu messen. Der Drucksensor wirkt dann als ein indirekter Verformungssensor. Beispielhaft ist hier lediglich ein Drucksensor dargestellt, es ist jedoch üblicher Weise so, dass wenigstens zwei Drucksensoren in gegenüberliegenden Fahrzeugseiten angeordnet sind, oder beispielsweise sogar vier, um beispielsweise bei einem viertürigen Fahrzeug alle Türen zu überwachen. Der Drucksensor muss dabei insbesondere in einem weitgehend geschlossenen Fahrzeugteil angeordnet sein, damit es zu einem adiabatischen Druckanstieg kommen kann.

Alternativ ist es möglich, dass solch ein Drucksensor auch in anderen Fahrzeugteilen angeordnet ist, um beispielsweise einen Front-, einen Offset- oder einen Heckaufprall zu detektierten. Wichtig dabei ist, dass es zu einem adiabatischen Druckanstieg kommen kann, um die schnelle Sensierung durch den Druckanstieg zu ermöglichen. Im Steuergerät, das sich beispielsweise auf dem Fahrzeugtunnel befinden kann, aber auch im Drucksensor selbst sind der Empfangsbaustein 7, der Prozessor 8 und der Speicher 9 angeordnet. Daneben können noch weitere Komponenten angeordnet sein, insbesondere auch eine Verbindung zu einem Beschleunigungssensor als Plausibilisitätssensor. Es kann auch der Beschleunigungssensor selbst in unmittelbarer Nähe des Prozessors 8 angeordnet sein. Anstatt eines Beschleunigungssensors können auch andere Sensortypen, wie Körperschallsensoren oder Verformungssensoren als Plausibilitätssensoren wirken. Nur wenn auch dieser Plausiblitätssensor einen Aufprall signalisiert, kann der Prozessor 8 die Rückhaltemittel 10 ansteuern. Ist das Steuergerät zentral im Fahrzeug angeordnet, dann ist die Leitung 6 hier als eine Zweidrahtleitung ausgebildet. Hier ist insbesondere eine unidirektionale Verbindung vom Drucksensor zum Steuergerät vorgesehen. Dabei wird ein Gleichstrom vom Steuergerät auf die Leitung 6 gegeben, um den Drucksensor mit der notwendigen Energie zu versorgen. Zur Datenübertragung prägt der Drucksensor als Stromschwankungen, also über Amplitudenmodulation, das Mess-Signal auf, so dass der Empfängerbaustein 7 über diese Stromschwankungen das Drucksignal erhält. Anstatt einer Amplitudenmodulation ist es auch möglich, eine Pulsweitenmodulation vorzusehen.

Alternativ ist es weiterhin möglich, auf der Leitung 6 eine bidirektionale Verbindung vorzusehen, wo also auch das Steuergerät Anfragen an den Drucksensor übertragen kann. Eine weitere Alternative stellt ein Sensorbus dar. An diesen Sensorbus können die Drucksensoren, wie in Figur 1 dargestellt, angeschlossen sein, und auch das Steuergerät. Dafür haben die angeschlossenen Sensoren und das Steuergerät Buscontroller, um den Datenverkehr über den Bus zu ermöglichen. Solch ein Bus ist insbesondere bei einer Mehrzahl von Sensoren von Nutzen, um Kabelaufwand zu reduzieren.

Die Normierung geschieht nun in der Signalvorverarbeitung 4, die die Division des gemessenen Drucks durch den Umgebungsdruck durchführt

Figur 2 visualisiert nun den Ablauf des Verfahrens, der durch die Vorrichtung gegeben ist. Im Verfahrensschritt 11 wird durch die Komponenten 1 bis 5 des Drucksensors, wie oben angegeben, das Drucksignal erzeugt. Es erfolgt dabei hier bereits durch die Signalvorverarbeitung 4 die Normierung des Drucksignals. In Verfahrensschritt 12 wird durch den Senderbaustein 5 das Drucksignal oder das normierte Drucksignal zum Steuergerät, und zwar dem Empfängerbaustein 7, übertragen. In Verfahrensschritt 13 übernimmt der Prozessor 8 das normierte Drucksignal. In Verfahrensschritt 14 führt nun der Prozessor 8 mittels des Speichers 9 den Auslösealgorithmus durch, wobei ein Plausibilitätssignal, vorzugsweise von einem Beschleunigungssensor, berücksichtigt wird. Nur, wenn das Drucksignal und das Plausibilitätssignal einen Aufprall anzeigen, wird auf einen Aufprall hin durch den Prozessor 8 im Auslösealgorithmus erkannt, und es wird zu Verfahrensschritt 15 gesprungen, um das Rückhaltemittel 10 anzusteuern. Bei der Ansteuerung des Rückhaltemittels 10 werden auch Parameter wie eine Insassenüberwachung bzw. -klassifizierung berücksichtigt. Wurde in Verfahrensschritt 14 kein Aufprall erkannt, dann wird zu Verfahrensschritt 11 zurückgesprungen.

**Patentansprüche**

1. Vorrichtung zur Aufprallsensierung mit wenigstens einem Drucksensor (1 bis 5), wobei ein Prozessor (8) mit dem wenigstens einen Drucksensor (1 bis 5) derart verbindbar ist, dass der Prozessor (8) in Abhängigkeit von einem Signal des wenigstens einen Drucksensors (1 bis 5) die Aufprallsensierung durchführt, wobei das Signal derart vorbereitet ist, dass das Signal auf einen vorgegebenen Druck normiert ist, **dadurch gekennzeichnet, dass** der Drucksensor (1-5) zur Normierung des Signals ausgebildet ist, wobei das Signal das Drucksignal ist und der Drucksensor (1-5) eine Signalverarbeitung (4) aufweist, die zur Normierung eine Division des Signals durch einen Umgebungsdruck durchführt.

2. Vorrichtung nach Anspruch 1, **dadurch gekennzeichnet, dass** das Signal auf einen Umgebungsdruck normiert ist.

**Claims**

1. Device for sensing an impact, having at least one pressure sensor (1 to 5), wherein a processor (8) can be connected to the at least one pressure sensor (1 to 5) in such a way that the processor (8) carries out the sensing of an impact as a function of a signal of the at least one pressure sensor (1 to 5), wherein the signal is prepared in such a way that the signal is standardized to a predefined pressure, **characterized in that** the pressure sensor (1-5) is designed to standardize the signal, wherein the signal is the pressure signal and the pressure sensor (1-5) has a signal processing means (4) which, for the purpose of standardization, divides the signal by an ambient pressure.

2. Device according to Claim 1, **characterized in that** the signal is standardized to an ambient pressure.

**Revendications**

1. Dispositif de détection d'impact comprenant au moins un capteur de pression (1 à 5), un processeur (8) pouvant être relié avec l'au moins un capteur de pression (1 à 5) de telle sorte que le processeur (8) réalise la détection d'impact en fonction d'un signal de l'au moins un capteur de pression (1 à 5), le signal étant préparé de telle sorte que le signal soit normalisé à une pression prédéfinie, **caractérisé en ce que** le capteur de pression (1 à 5) est configuré pour normaliser le signal, le signal étant le signal de pression et le capteur de pression (1 à 5) présentant un dispositif de traitement de signal (4) qui, à des fins de normalisation, réalise une division du signal par une pression ambiante.

2. Dispositif selon la revendication 1, **caractérisé en ce que** le signal est normalisé à une pression ambiante.

Fig. 1

Fig. 2

**EP 1 532 020 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10210131 A
- DE 19830835 A1